(19) **Europäisches Patentamt / European Patent Office / Office européen des brevets**

(11) **EP 3 012 992 B1**

(12) **EUROPEAN PATENT SPECIFICATION**

(45) Date of publication and mention
of the grant of the patent:
**18.07.2018  Bulletin 2018/29**

(21) Application number: **14814048.6**

(22) Date of filing: **24.02.2014**

(51) Int Cl.:
**H04L 1/06** (2006.01)          **H04B 7/01** (2006.01)
**H01Q 19/00** (2006.01)          **H04B 7/04** (2017.01)

(86) International application number:
**PCT/CN2014/072431**

(87) International publication number:
**WO 2014/201874 (24.12.2014 Gazette 2014/52)**

(54) **METHOD AND DEVICE FOR IMPROVING RELIABILITY OF SINGLE-RADIO FREQUENCY MULTIPLE-INPUT AND MULTIPLE-OUTPUT (MIMO) TRANSMISSION**

VERFAHREN UND VORRICHTUNG ZUR VERBESSERUNG DER VERLÄSSLICHKEIT VON EINZELFUNKFREQUENZ-MIMO-ÜBERTRAGUNG

PROCÉDÉ ET DISPOSITIF POUR AMÉLIORER LA FIABILITÉ D'UNE ÉMISSION À ENTRÉES MULTIPLES ET SORTIES MULTIPLES (MIMO) À FRÉQUENCE RADIO UNIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.06.2013  CN 201310239676**

(43) Date of publication of application:
**27.04.2016  Bulletin 2016/17**

(73) Proprietor: **Huawei Technologies Co., Ltd.**
**Longgang District**
**Shenzhen, Guangdong 518129 (CN)**

(72) Inventors:
• **WU, Tao**
**Shenzhen**
**Guangdong 518129 (CN)**
• **LU, Weishan**
**Shenzhen**
**Guangdong 518129 (CN)**

(74) Representative: **Isarpatent**
**Patent- und Rechtsanwälte Behnisch Barth Charles**
**Hassa Peckmann & Partner mbB**
**Friedrichstrasse 31**
**80801 München (DE)**

(56) References cited:
**CN-A- 101 316 378      CN-A- 102 325 000**
**US-A1- 2011 064 061**

• **ALRABADI O ET AL: "MIMO transmission and reception techniques using three-element ESPAR antennas", IEEE COMMUNICATIONS LETTERS, IEEE SERVICE CENTER, PISCATAWAY, NJ, US, vol. 13, no. 4, 1 April 2009 (2009-04-01), pages 236-238, XP011255561, ISSN: 1089-7798**
• **ALRABADI O ET AL: "A universal encoding scheme for MIMO transmission using a single active element for PSK modulation schemes", IEEE TRANSACTIONS ON WIRELESS COMMUNICATIONS, IEEE SERVICE CENTER, PISCATAWAY, NJ, US, vol. 8, no. 10, 1 October 2009 (2009-10-01), pages 5133-5142, XP011278530, ISSN: 1536-1276, DOI: 10.1109/TWC.2009.080824**
• **Anonymous: "Forward error correction - Wikipedia, the free encyclopedia", , 14 June 2013 (2013-06-14), pages 1-7, XP055276426, Retrieved from the Internet: URL:https://en.wikipedia.org/w/index.php?t itle=Forward_error_correction&oldid=559805 159 [retrieved on 2016-05-30]**
• **HAN B ET AL: "Active parasitic arrays for low cost compact MIMO transmitters", ANTENNAS AND PROPAGATION (EUCAP), PROCEEDINGS OF THE 5TH EUROPEAN CONFERENCE ON, IEEE, 11 April 2011 (2011-04-11), pages 3663-3667, XP031878074, ISBN: 978-1-4577-0250-1**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

EP 3 012 992 B1

- **HAN BO ET AL: "MIMO over ESPAR with 16-QAM Modulation", IEEE WIRELESS COMMUNICATIONS LETTERS, IEEE, PISCATAWAY, NJ, USA, vol. 2, no. 6, 1 December 2013 (2013-12-01), pages 687-690, XP011534481, ISSN: 2162-2337, DOI: 10.1109/WCL.2013.092813.130433 [retrieved on 2013-12-16]**

**Description**

**TECHNICAL FIELD**

The present invention relates to the field of mobile communications technologies and, in particular, to a method and apparatus for improving reliability of single radio frequency multiple-input and multiple-output MIMO transmission.

**BACKGROUND**

A multiple-input and multiple-output (MIMO, Multiple Input and Multiple Output) technique based on multiple antennas can improve system performance and frequency spectrum efficiency effectively, which have been generally accepted and extensively used. For example, the MIMO technique has been applied in wireless systems, such as LTE and WiMax. From the principle of MIMO, it can be known that the capacity of MIMO system has a linear relationship with the number of transmission antennas. That is, as the number of transmission antennas increases, the capacity of MIMO system also increases. However, application limitations of the MIMO technique also appears gradually as the number of transmission antennas increases, which are mainly reflected in the following two aspects:

Each antenna needs to connect to a radio frequency (RF, Radio Frequency) link for transferring transmitted and received data. The increase of the number of antennas may cause the increase of radio frequency links, thereby increasing costs and power consumption extremely; and
Due to limited space, small network devices, such as WiFi AP, Small Cell small base station, and eRelay and the like, and terminals cannot accommodate a large number of antennas, and the application of MIMO is restricted. Or, even if multiple antennas may be accommodated, the spaces between the antennas are quite small, which will cause that the coherence between signals transmitted by different antennas is relatively strong, and MIMO has a decreased gain or even cannot work properly.

In order to solve the above problems existed in multiple-antenna MIMO, the prior art proposes a solution currently, which uses a MIMO technique based on a single radio frequency channel to replace the multiple-antenna MIMO technique.

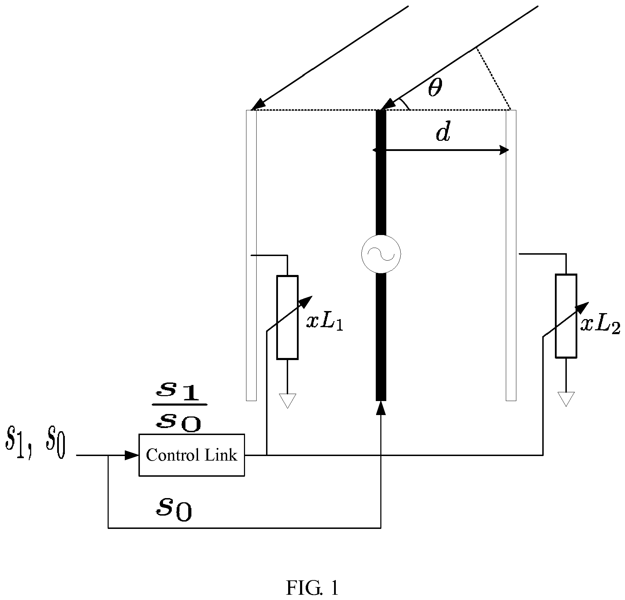

FIG. 1 shows an architecture of a single carrier radio frequency antenna Single RF according to the prior art, where the architecture specifically includes an antenna active element, parasitic elements, and parasitic element reactance components, and the specific function and principle are as follows:

The antenna active element (active element) is in the middle, and the antenna active element can transmit and receive base band signals via a radio frequency link, shown as S0 in the FIG. 1; and the two oscillators on the sides are parasitic elements (parasitic element). The parasitic elements have no radio frequency link, and can not transmit or receive signals directly. Each parasitic element can adjust a mode for transmitting a signal by adjusting its own reactance (i.e., $xL_1$ and $xL_2$ as shown in the figure), and please refer to the following description for a specific manner. The reactance adjustment of the parasitic elements is implemented by inputting signal S0 and S1 via a specific control link; d is a space between antennas, and $q$ is an angle between an incident signal and an antenna array. In a typical single carrier radio frequency MIMO, it is set that $d = \dfrac{\lambda}{16}$.

According to the single radio frequency antenna architecture as shown in FIG. 1, an far field signal with an exit angle of $q$ is represented as:

$$G(\theta) = v_s \begin{bmatrix} 1 & e^{-jkdcos(\theta)} & e^{+jkdcos(\theta)} \end{bmatrix} \underbrace{(Z+X)^{-1} \begin{bmatrix} 1 \\ 0 \end{bmatrix}}_{\mathbf{I} = [I_0 \ I_1 \ I_2]^T} = v_s \begin{bmatrix} 1 & e^{-jkdcos(\theta)} & e^{+jkdcos(\theta)} \end{bmatrix} \begin{bmatrix} I_0 \\ I_1 \\ I_2 \end{bmatrix} \quad (1)$$

Where, $\mathbf{X} = \begin{bmatrix} Z_s & 0 & 0 \\ 0 & jX_{L1} & 0 \\ 0 & 0 & jX_{L2} \end{bmatrix}$, $Z_S$ is a source impedance of the parasitic elements, and $xL_1$ and $xL_2$ are adjustable impedances of the two parasitic elements respectively, and j is an imaginary number; and

$$\mathbf{Z} = \begin{bmatrix} Z_{00} & Z_{01} & Z_{02} \\ Z_{10} & Z_{11} & Z_{12} \\ Z_{20} & Z_{21} & Z_{21} \end{bmatrix},$$

where $Z_{ii}$ is a self-impedance of each antenna array element, $Z_{ij}$ is a mutual impedance between the antenna array elements, where i, j=0, 1, 2. After an architecture of the antenna array is determined, the value of Z is able to be calculated out according to circuit theory; $K=\dfrac{2\pi}{\lambda}$, where $\lambda$ is a wavelength; $v_S$ represents an antenna gain, whose value is able to be adjusted by an amplifier of a radio frequency link.

Further expand

$$G(\theta) = v_s \begin{bmatrix} 1 & e^{-jkdcos(\theta)} & e^{+jkdcos(\theta)} \end{bmatrix} \underbrace{(Z+X)^{-1} \begin{bmatrix} 1 \\ 1 \\ 0 \end{bmatrix}}_{\mathbf{I} = [I_0\ I_1\ I_2]^T} = v_s \begin{bmatrix} 1 & e^{-jkdcos(\theta)} & e^{+jkdcos(\theta)} \end{bmatrix} \begin{bmatrix} I_0 \\ I_1 \\ I_2 \end{bmatrix},$$

and ob-

tain:

$$\begin{aligned} G(\theta) &= v_s/I_0 \left(1 + \tfrac{I_1}{I_0}e^{-jkdcos(\theta)} + \tfrac{I_2}{I_0}e^{+jkdcos(\theta)}\right) \\ &= v_s/I_0 \left(\underbrace{1}_{B_0(\theta)} + (\tfrac{I_2+I_1}{I_0})\underbrace{cos(kdcos(\theta))}_{B_1(\theta)} + j(\tfrac{I_2-I_1}{I_0})\underbrace{sin(kdcos(\theta))}_{B_2(\theta)}\right) \end{aligned} \quad (2)$$

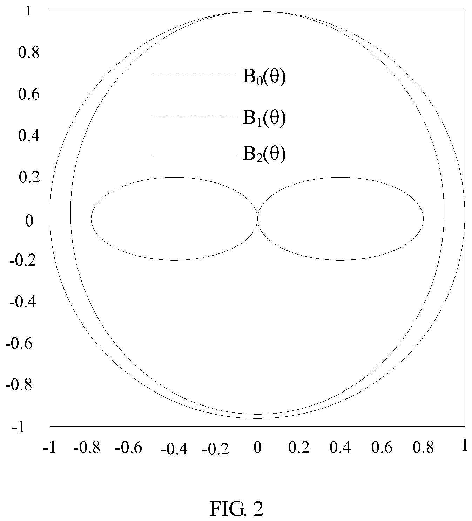

Amplitude information of $B_0(\theta)$, $B_1(\theta)$, and $B_2(\theta)$ in the above equation is shown in FIG. 2, where the $B_0(\theta)$, $B_1(\theta)$, and $B_2(\theta)$ are component elements of the antenna gain, where $d=\dfrac{\lambda}{16}$. It can be seen from FIG. 2, that $B_0(q)$ and $B_1(q)$ are consistent generally, and by calculating energy distribution between them, it can be obtained:

$$B_1(\theta) \simeq cB_0(\theta) = 0.9612B_0(\theta) \quad (3),$$

where c=0.9612;

In additional, from FIG. 2 and the calculation, it can be obtained that $B_2(\theta)$ is orthogonal to $B_0(\theta)$ and $B_1(q)$.

Substitute (3) into the equation (2), it is obtained:

$$\begin{aligned} G(\theta) &= v_s/I_0 \left(1 + \tfrac{I_1}{I_0}e^{-jkdcos(\theta)} + \tfrac{I_2}{I_0}e^{+jkdcos(\theta)}\right) \\ &= v_s/I_0 \left(\underbrace{1}_{B_0(\theta)} + (\tfrac{I_2+I_1}{I_0})\underbrace{cos(kdcos(\theta))}_{B_1(\theta)} + j(\tfrac{I_2-I_1}{I_0})\underbrace{sin(kdcos(\theta))}_{B_2(\theta)}\right) \\ &\simeq v_s/I_0 \left(\left(1 + c(\tfrac{I_2+I_1}{I_0})\right)B_0(\theta) + j(\tfrac{I_2-I_1}{I_0})B_2(\theta)\right) \\ &= \tfrac{v_s}{I_0+c(I_1+I_2)}\left(B_0(\theta) + R_s B_1(\theta)\right) \\ &= s_0 \left(B_0(\theta) + R_0\tfrac{s_1}{s_0}B_2(\theta)\right) \end{aligned} \quad (4)$$

$v_S$, $xL_1$ and $xL_2$ may be adjusted to satisfy $s_0 = \dfrac{v_s}{I_0+c(I_1+I_2)}$ and $Rs = j\dfrac{I_2-I_1}{I_0+(I_2+I_1)c} = R_0\dfrac{s_1}{s_0}$, where $R_0$ is a modulation coefficient, for compensating for power imbalance between $B_0(\theta)$ and $B_2(\theta)$, and $R_0$ = 3.71 under an ideal channel. A value of the modulation coefficient $R_0$ to meet the requirements depends on hardware, and it is not continuous.

According to the above description, it can be seen that, since $B_0(\theta)$ and $B_2(\theta)$ are orthogonal to each other, S0 and S1 can be considered as reaching a receiver via mutually orthogonal channels, and hence a conventional MIMO method can be used to perform receiving processing. In other words, $B_0(\theta)$ and $B_2(\theta)$ can be taken as two virtual transmission antennas, and data to be transmitted via each antenna is S0 and S1 respectively.

Since $B_0(\theta)$ and $B_2(\theta)$ are corresponding to different powers, the modulation coefficient $R_0$ should be used to compensate for the power difference between them, and under an ideal omnidirectional transmission mode and when $|R_0| = 3.61$, signal powers of paths corresponding to $B_0(\theta)$ and $B_2(\theta)$ are almost equal, however, in an actual situation, spatial multi-path direction does not meet a requirement of omnidirectional uniform distribution, the implementation of the modulation coefficient $R_0$ is affected by various kinds of factors including that a dynamic range of $R_0$ which is implemented by adjusting reactance values of $xL_1$ and $xL_2$ is limited and that the adjustment of $R_0$ first needs to ensure that constellation points correspondingly transmitted on $B_2(\theta)$ meet requirements, which will limits the adjustment range of $R_0$.

As described above, the modulation coefficient $R_0$ in an actual process cannot guarantee that the transmission powers of signals corresponding to $B_0(\theta)$ and $B_2(\theta)$ are almost equal, and the signal energy corresponding to $B_2(\theta)$ is smaller than that corresponding to $B_0(\theta)$.

The problem existed in the prior art is that, since there is only one power amplifier under the Single RF MIMO situation, transmission powers of different signals cannot be adjusted to achieve that the transmission powers of signals corresponding to the component elements $B_0(\theta)$ and $B_2(\theta)$ of the antenna gain are equal, and the value of modulation coefficient $R_0$ is achieved by a control circuit and is not able to be adjusted adaptively. The above two reasons cause low reliability of antenna transmission.

D1 (= ALRABADI O ET AL: "MIMO transmission and reception techniques using three-element ESPAR antennas", IEEE COMMUNICATIONS LETTERS, IEEE SERVICE CENTER, PISCATAWAY, NJ, US, vol. 13, no. 4, 1 April 2009 (2009-04-01), pages 236-238, XP011255561, ISSN: 1089-7798) discloses MIMO transmission and reception techniques using three-element ESPAR antennas, wherein Fig.1 shows a simple control circuit for spatially multiplexing two BPSK signals using the 3-element ESPAR array. The first BPSK sub-stream ($s_1 = I_{in}$) is fed into the single active port after being modulated and up-converted. The second substream ($s_2$) is XOR-ed with the first in the binary domain (b1⊕b2) and the output control signal is used for binary switching between the two reactances $jX_{L1}$ and $jXL2$ (i.e. selecting [$jXL1\ jXL2$] when b1⊕b2 = 0 and [$jXL2\ jXLI$] when b1⊕b2 = 1). Notice that ($\alpha_{10}$-$\alpha_{20}$) at [$jXL1\ jXL2$] becomes ($\alpha_{20}$-$\alpha_{10}$) at [$jXL2\ jXLI$]. (see paragraph below equ. (3) and FIG. 1)

## SUMMARY

Embodiments of the present invention provide a method for improving reliability of single radio frequency MIMO transmission, so as to solve the problem of low reliability of antenna transmission in the prior art.

In a first aspect, the method for improving reliability of single radio frequency MIMO transmission includes:

receiving original information bits, encoding the original information bits, and dividing same into information bits and parity bits; interleaving the information bits and the parity bits respectively; filling a first stream and a second stream with the interleaved information bits and parity bits; modulating the first stream and the second stream to obtain a modulated symbol S0 mapped from the first stream and a modulated symbol S1 mapped from the second stream; sending S0 to a power amplifier, and transmitting information of the first stream via an active element; and sending S0 and S1 to a control circuit, and transmitting information of the second stream by the control circuit through controlling electromagnetic coupling between the active element and a parasitic element; wherein the filling a first stream and a second stream with the interleaved information bits and parity bits, is specifically:

presuming that the interleaved information bits are $a_n$, n=1, ..., $N_1$, and the interleaved parity bits is $b_m$, m=1, ..., $N_2$; establishing the first stream and the second stream, where the first stream and the second stream include a same number of bits, and the number of bits included in the first stream and the second stream is k, where $k = \dfrac{N_1 + N_2}{2}$; judging whether a number of bits of the interleaved information bits is less than or equal to the number of bits included in the first stream; when the number of bits of the interleaved information bits is less than or equal to the number of bits included in the first stream, filling the first stream with the interleaved information bits, and filling remaining bits of the first stream and bits of the second stream with the interleaved parity bits; and when the number of bits of the interleaved information bits is greater than the number of bits included in the first stream, filling the first stream and the second stream with the interleaved information bits, and filling remaining bits of the second stream with the interleaved parity bits; or,

presuming that the interleaved information bits are $a_n$, n=1, ..., $N_1$, and the interleaved parity bits is $b_m$, m=1, ..., $N_2$ ; establishing the first stream and the second stream, where the first stream and the second stream include a same number of bits, and the number of bits included in the first stream and the second stream is k, where $k = \dfrac{N_1 + N_2}{2}$; determining a numerical relationship between a number of bits of the interleaved information bits and the number of bits included in the first stream; when $N_1 <= \dfrac{k}{2}$, filling first $N_1$ bits of the first stream with the interleaved information bits, and filling remaining bits of the first stream and the second stream with the interleaved parity bits; when $\dfrac{k}{2} < N_1 <= k$, filling first $\dfrac{k}{2}$ bits of the first stream and first $(N1 - \dfrac{k}{2})$ bits of the second stream with the interleaved information bits, and filling remaining bits of the first stream and remaining bits of the second stream with the interleaved parity bits; when $k < N_1 <= \dfrac{3k}{2}$, filling the first $\dfrac{k}{2}$ bits of the first stream, first $\dfrac{k}{2}$ bits of the second stream, and the remaining bits of the first stream with the interleaved information bits sequentially, and filling the remaining bits of the first stream and remaining bits of the second stream with the interleaved parity bits; and when $\dfrac{3k}{2} < N_1 < 2k$, filling the first $\dfrac{k}{2}$ bits of the first stream, the first $\dfrac{k}{2}$ bits of the second stream, last $\dfrac{k}{2}$ bits of the first stream, and $(\dfrac{k}{2} + 1)$-th through $(N_1-k)$-th bits of the second stream with the interleaved information bits sequentially, and filling $(N_1-k+1)$-th through k-th bits of the second stream with the interleaved parity bits.

In a second aspect, an apparatus for improving reliability of single radio frequency MIMO transmission includes:

a dividing unit, configured to receive original information bits, encode the original information bits, and divide same into information bits and parity bits;
an interleaving unit, configured to interleave the information bits and the parity bits respectively;
a filling unit, configured to fill a first stream and a second stream with the interleaved information bits and parity bits;
a modulating unit, configured to modulate the first stream and the second stream to obtain a modulated symbol S0 mapped from the first stream and a modulated symbol S1 mapped from the second stream;
a first sending unit, configured to send S0 to a power amplifier, and transmit information of the first stream via an active element; and
a second sending unit, configured to send S0 and S1 to a control circuit, where the control circuit transmits information of the second stream by controlling electromagnetic coupling between the active element and a parasitic element;

wherein the filling unit is specifically configured to:
presuming that the interleaved information bits are $a_n$, n=1, ..., $N_1$, and the interleaved parity bits are $b_m$, m=1, ..., $N_2$ ; establish the first stream and the second stream, where the first stream and the second stream include a same number of bits, and the number of bits included in the first stream and the second stream is k, wherein $k = \dfrac{N_1 + N_2}{2}$; judge whether a number of bits of the interleaved information bits is less than or equal to the number of bits included in the first stream; when the number of bits of the interleaved information bits is less than or equal to the number of bits included in the first stream, fill the first stream with the interleaved information bits, and fill remaining bits of the first stream and bits of the second stream with the interleaved parity bits; and when the number of bits of the interleaved information bits is greater than the number of bits included in the first stream, fill the first stream and the second stream with the interleaved information bits, and fill remaining bits of the second stream with the interleaved parity bits; or,

In a third possible implementation of the second aspect, the filling unit is specifically configured to: presuming that the interleaved information bits are $a_n$, n=1, ..., $N_1$, and the interleaved parity bits are $b_m$, m=1, ..., $N_2$; establish the first stream and the second stream, where the first stream and the second stream include a same number of bits, and the number of bits included in the first stream and the second stream is k, where $k = \dfrac{N_1 + N_2}{2}$; determine a numerical relationship between a number of bits of the interleaved information bits and the number of bits included in the first stream; when $N_1 <= \dfrac{k}{2}$, fill first $N_1$ bits of the first stream with the interleaved information bits, and fill remaining bits of the first stream and the second stream with the interleaved parity bits; when $\dfrac{k}{2} < N_1 <= k$, fill first $\dfrac{k}{2}$ bits of the first stream and first $(N1 - \dfrac{k}{2})$ bits of the second stream with the interleaved information bits, and fill remaining bits of the first stream and remaining bits of the second stream with the interleaved parity bits; when $k < N_1 <= \dfrac{3k}{2}$, fill the first $\dfrac{k}{2}$ bits of the first stream, first $\dfrac{k}{2}$ bits of the second stream, and the remaining bits of the first stream with the interleaved information bits sequentially, and fill the remaining bits of the first stream and remaining bits of the second stream with the interleaved parity bits; and when $\dfrac{3k}{2} < N_1 < 2k$, fill the first $\dfrac{k}{2}$ bits of the first stream, the first $\dfrac{k}{2}$ bits of the second stream, last $\dfrac{k}{2}$ bits of the first stream, and $(\dfrac{n}{2} + 1)$-th through ($N_1$-k)-th bits of the second stream with the interleaved information bits sequentially, and fill ($N_1$-k+1)-th through k-th bits of the second stream with the interleaved parity

It can be seen from the above solutions that embodiments of the present invention try to ensure the reliability of the information bits transmission by putting the information bits into the first stream as much as possible and transmitting the first stream via a power amplifier, thereby solving the problem of low reliability of antenna transmission existing in the prior art.

## BRIEF DESCRIPTION OF DRAWINGS

In order to describe the technical solutions in embodiments of the present invention or in the prior art more clearly, the following briefly introduces the accompanying drawings needed for describing the embodiments or the prior art. Apparently, the accompanying drawings in the following description illustrate merely some embodiments of the present invention, and persons of ordinary skill in the art may still derive other drawings from these accompanying drawings without creative effort.

FIG. 1 is an architecture of a single carrier radio frequency antenna Single RF according to the prior art of the present invention;

FIG. 2 is an amplitude information graph of component elements $B_0(\theta)$, $B_1(\theta)$, and $B_2(\theta)$ of an antenna gain, according to the prior art of the present invention;

FIG. 3 is a diagram of an implementation scenario of a method for improving reliability of single radio frequency MIMO transmission according to an embodiment of the present invention;

FIG. 4 is a implementation flowchart of a method for improving reliability of single radio frequency MIMO transmission according to another embodiment of the present invention;

FIG. 5 is a schematic diagram for implementing a filling method according to another embodiment of the present invention;

FIG. 6 is a schematic diagram for implementing a filling method according to another embodiment of the present invention;

FIG. 7 is a 16QAM constellation diagram according to another embodiment of the present invention;

FIG. 8 is a component structure diagram of an apparatus for improving reliability of single radio frequency MIMO transmission according to another embodiment of the present invention; and
FIG. 9 is a component structure diagram of the apparatus for improving reliability of single radio frequency MIMO transmission according to an example of the present invention.

**DESCRIPTION OF EMBODIMENTS**

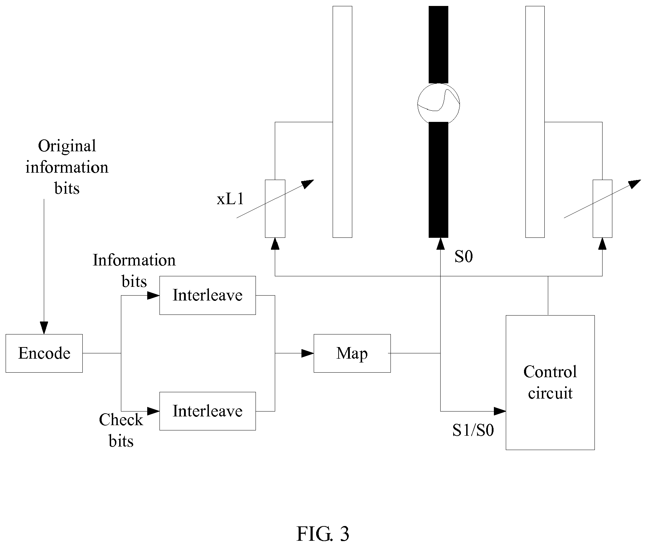

In order to make the objectives, technical solutions, and advantages of embodiments of the present invention clearer, the following describes the present invention in detail with reference to the accompanying drawings and embodiments. It should be understood that, the embodiments described herein are merely used to explain the present invention, rather than to limit the present invention. FIG. 3 is an implementation scenario of a method for improving reliability of single radio frequency MIMO transmission according to an embodiment of the present invention.

Original information bits are encoded and then divided into information bits and parity bits, the information bits and parity bits are interleaved respectively, and a first stream and a second stream are filled with the interleaved information bits and parity bits and then are modulated. The first stream is sent to a power amplifier and is transmitted via an active element. The first stream and the second stream are sent to a control circuit, and the control circuit performs transmission by controlling electromagnetic coupling between the active element and a parasitic element.

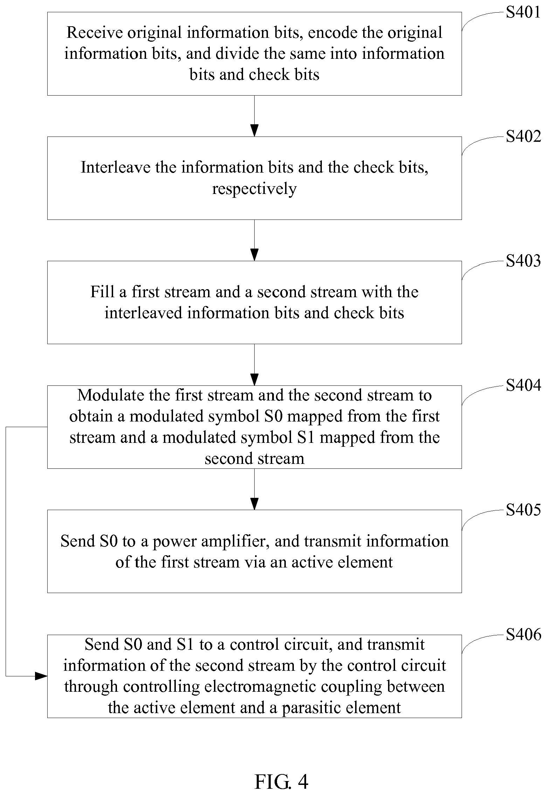

FIG. 4 shows an implementation flowchart of a method for improving reliability of single radio frequency MIMO transmission according to another embodiment of the present invention, where an execution entity of this embodiment is an apparatus for improving reliability of single radio frequency MIMO transmission, and the process of the method is described in detail as follows:

In step 401, receive original information bits, encode the original information bits, and divide same into information bits and parity bits.

It should be noted that, encoding the original information bits and dividing the same into information bits and parity bits belongs to the prior art, and hence it will not be described particularly herein; an objective for encoding the original information bits and dividing the same into information bits and parity bits is to separate important information from relatively less important information.

In step 402, interleave the information bits and the parity bits, respectively.

It should be noted that, interleaving is also a prior art in the field, and hence it will not be described particularly herein.

In step 403, fill a first stream and a second stream with the interleaved information bits and parity

It should be noted that, "the first stream" and "the second stream" herein are merely used for the convenience of referring and distinguishing, rather than for representing an order.

In step S404, modulate the first stream and the second stream to obtain a modulated symbol S0 mapped from the first stream and a modulated symbol S1 mapped from the second stream.

In step S405, send S0 to a power amplifier, and transmit information of the first stream via an active element.

In step S406, send S0 and S1 to a control circuit, and transmit information of the second stream by the control circuit through controlling electromagnetic coupling between the active element and a parasitic element.

Optionally, a not claimed method for implementing step S406 specifically includes: send the S0 and S1 to the control circuit, and select, by the control circuit, proper $xL_1$ and $xL_2$ according to a value of $\dfrac{S1}{S0}$ to make a signal that is transmitted by the electromagnetic coupling between the active element and the parasitic element be equal to $R_0 \dfrac{S1}{S0}$.

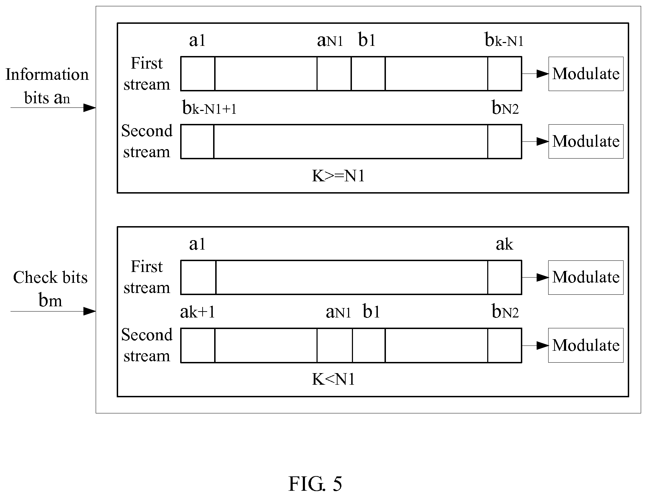

Optionally, as shown in FIG. 5a, a claimed method for implementing step S403 specifically includes:

presuming that the interleaved information bits are $a_n$, n=1, ..., $N_1$, and the interleaved parity bits are $b_m$, m=1, ..., $N_2$; establish the first stream and the second stream, where the first stream and the second stream include the same number of bits, and the number of bits included in the first stream and the second stream is k, where $\mathrm{k} = \dfrac{N_1 + N_2}{2}$;

judge whether the number of bits of the interleaved information bits is less than or equal to the number of bits included in the first stream;

when the number of bits of the interleaved information bits is less than or equal to the number of bits included in the first stream, fill the first stream with the interleaved information bits, and fill remaining bits of the first stream and bits of the second stream with the interleaved parity bits; and

when the number of bits in the interleaved information bits is greater than the number of bits included in the first stream, fill the first stream and the second stream with the interleaved information bits, and fill remaining bits of the second stream with the interleaved parity bits.

In this embodiment, the above method for implementing S403 is trying to put the information bits into the first stream as much as possible, since the bits of the first stream will be sent to the power amplifier for power amplification, which may effectively ensure the highest reliability for transmission of information bits.

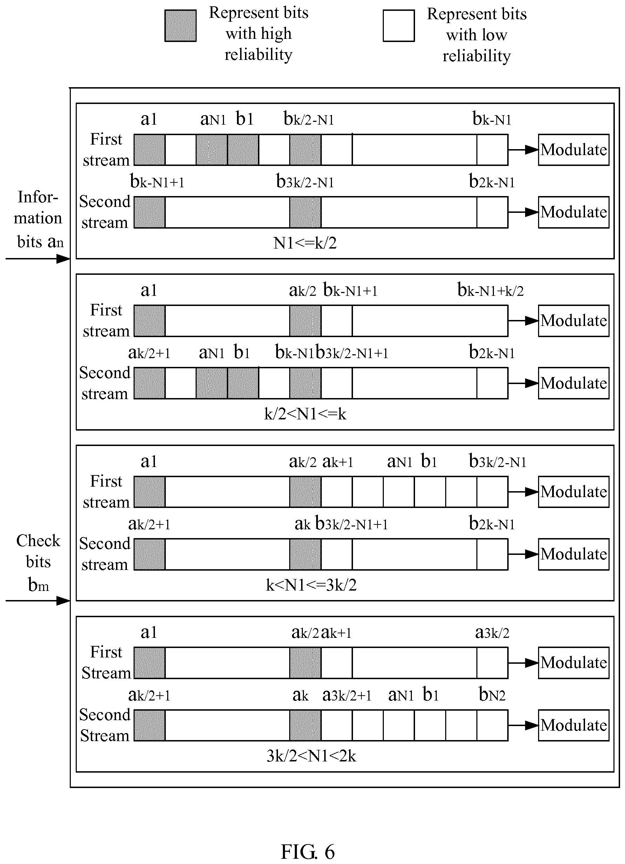

Optionally, as shown in FIG. 6, a claimed method for implementing step S403 specifically includes:

presuming that the interleaved information bits are $a_n$, n=1, ..., $N_1$, and the interleaved parity bits are $b_m$, m=1, ..., $N_2$; establish the first stream and the second stream, where the first stream and the second stream include the same number of bits, and the number of bits included in the first stream and the second stream is k, where $\mathrm{k}=\dfrac{N_1+N_2}{2}$ ;

determine a numerical relationship between the number of bits of the interleaved information bits and the number of bits included in the first stream;

when $N_1<=\dfrac{k}{2}$, fill first $N_1$ bits of the first stream with the interleaved information bits, and fill remaining bits of the first stream and the second stream with the interleaved parity bits;

when $\dfrac{k}{2}<N_1<=\mathrm{k}$, fill first $\dfrac{k}{2}$ bits of the first stream and first $(\mathrm{N}1-\dfrac{k}{2})$ bits of the second stream with the interleaved information bits, and fill remaining bits of the first stream and remaining bits of the second stream with the interleaved parity bits;

when $\mathrm{k}<N_1<=\dfrac{3k}{2}$, fill the first $\dfrac{k}{2}$ bits of the first stream, first $\dfrac{k}{2}$ bits of the second stream, and the remaining bits of the first stream with the interleaved information bits sequentially, and fill the remaining bits of the first stream and remaining bits of the second stream with the interleaved parity bits; and

when $\dfrac{3k}{2}<N_1<2\mathrm{k}$, fill the first $\dfrac{k}{2}$ bits of the first stream, the first $\dfrac{k}{2}$ bits of the second stream, last $\dfrac{k}{2}$ bits of the first stream, and $(\dfrac{k}{2}+1)$-th through ($N_1$-k)-th bits of the second stream with the interleaved information bits sequentially, and fill ($N_1$-k+1)-th through k-th bits of the second stream with the interleaved parity bits.

Preferably, a not claimed method for implementing step S404 specifically includes:

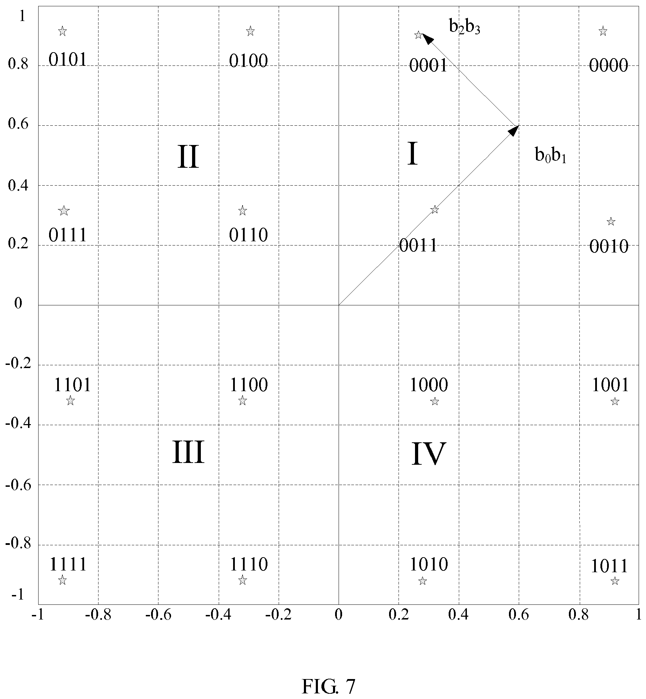

After filling with the interleaved information bits and parity bits using the method as shown in FIG. 6, modulation may be performed using a 16QAM constellation diagram as shown in FIG. 7.

Modulate the first stream and the second stream using a 16QAM constellation points mapping method, and divide bits corresponding to 16QAM constellation points into bit positions with high reliability and bit positions with low reliability;

fill corresponding bit positions with high reliability in S0 and S1 with the information bits; and after filling with the information bits, fill remaining bit positions in S0 and S1 with the parity bits.

As shown in FIG. 7, 4 bits $b_0b_1b_2b_3$ are mapped onto the 16QAM constellation diagram, and a mapping rule is represented as follows:

An entire plane is divided into four quadrants, which are respectively:

Quadrant I: x>0, y>0, $b_0b_1$=00;
Quadrant II: x<0, y>0, $b_0b_1$=01;
Quadrant III: x<0, y<0, $b_0b_1$=11; and
Quadrant IV: x>0, y<0, $b_0b_1$=10.

During constellation mapping, first select an quadrant of an constellation point according to the value of $b_0b_1$, and then select an position of the constellation point in the mapped quadrant according to the value of $b_2b_3$, and thus it can be seen that $b_0b_1$ has higher reliability, and $b_2b_3$ has low reliability.

In this not claimed example, the above preferable method modulates the first stream and the second stream by using a 16QAM constellation points mapping method, and makes different bits have different reliability by using 16QAM modulation, and uses a different mapping rule, thereby further improving the performance and achieving the objective of transmitting the information bits with high reliability.

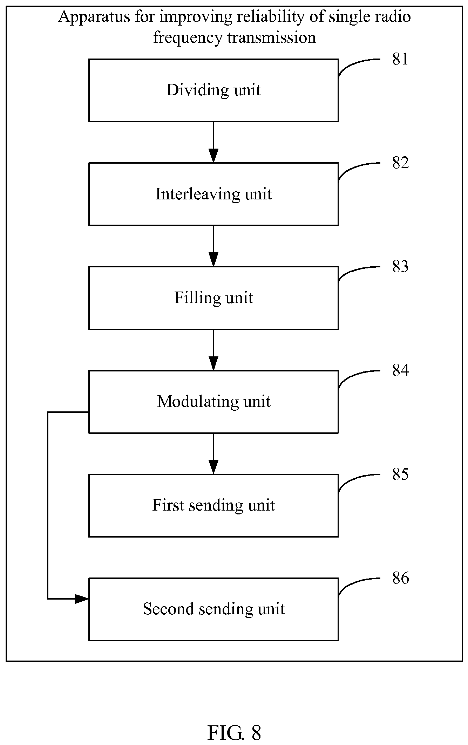

FIG. 8 shows a component structure of an apparatus for improving reliability of single radio frequency MIMO transmission according to another embodiment of the present invention, which only shows parts relevant to the embodiment of the present invention for convenience of explanation. The apparatus for improving reliability of single radio frequency transmission includes:

> a dividing unit 81, configured to receive original information bits, encode the original information bits, and then divide the same into information bits and parity bits;
> an interleaving unit 82, configured to interleave the information bits and the parity bits, respectively;
> a filling unit 83, configured to fill a first stream and a second stream with the interleaved information bits and parity bits;
> a modulating unit 84, configured to modulate the first stream and the second stream to obtain a modulated symbol S0 mapped from the first stream and a modulated symbol S1 mapped from the second stream;
> a first sending unit 85, configured to send S0 to a power amplifier, and transmit information of the first stream via an active element; and
> a second sending unit 86, configured to send S0 and S1 to a control circuit, where the control circuit transmits information of the second stream by controlling electromagnetic coupling between the active element and a parasitic element.

Optionally, in a not claimed example, the second sending unit 86 is specifically configured to: send the S0 and S1 to the control circuit, where the control circuit selects proper $xL_1$ and $xL_2$ according to a value of $\dfrac{S1}{S0}$, to make a signal that is transmitted by the electromagnetic coupling between the active element and the parasitic element be equal to $R_0 \dfrac{S1}{S0}$.

Optionally, in a claimed embodiment, the filling unit 83 is specifically configured to:

> presuming that the interleaved information bits are $a_n$, n=1, ..., $N_1$, and the interleaved parity bits are $b_m$, m=1, ..., $N_2$;
> establish the first stream and the second stream, where the first stream and the second stream include the same number of bits, and the number of bits included in the first stream and the second stream is k, where $k = \dfrac{N_1 + N_2}{2}$;
> judge whether the number of bits of the interleaved information bits is less than or equal to the number of bits included in the first stream;
> when the number of bits of the interleaved information bits is less than or equal to the number of bits included in the first stream, fill the first stream with the interleaved information bits, and fill remaining bits of the first stream and bits of the second stream with the interleaved parity bits; and
> when the number of bits of the interleaved information bits is greater than the number of bits included in the first stream, fill the first stream and the second stream with the interleaved information bits, and fill remaining bits of the second stream with the interleaved parity bits.

Optionally, in a claimed embodiment, the filling unit 83 is specifically configured to:

> presuming that the interleaved information bits is $a_n$, n=1, ..., $N_1$, and the interleaved parity bits is $b_m$, m=1, ..., $N_2$;
> establish the first stream and the second stream, where the first stream and the second stream include the same number of bits, and the number of bits included in the first stream and the second stream is k, where $k = \dfrac{N_1 + N_2}{2}$;
> determine a numerical relationship between the number of bits of the interleaved information bits and the number of bits included in the first stream;
> when $N_1 <= \dfrac{k}{2}$, fill first $N_1$ bits of the first stream with the interleaved information bits, and fill remaining bits of the first stream and the second stream with the interleaved parity bits;

when $\frac{k}{2} < N_1 <= k$, fill first $\frac{k}{2}$ bits of the first stream and first $(N1 - \frac{k}{2})$ bits of the second stream with the interleaved information bits, and fill remaining bits of the first stream and remaining bits of the second stream with the interleaved parity bits;

when $k < N_1 <= \frac{3k}{2}$, fill the first $\frac{k}{2}$ bits of the first stream, first $\frac{k}{2}$ bits of the second stream, and the remaining bits of the first stream with the interleaved information bits sequentially, and fill the remaining bits of the first stream and remaining bits of the second stream with the interleaved parity bits; and

when $\frac{3k}{2} < N_1 < 2k$, fill the first $\frac{k}{2}$ bits of the first stream, the first $\frac{k}{2}$ bits of the second stream, last $\frac{k}{2}$ bits of the first stream, and $(\frac{k}{2} + 1)$-th through $(N_1-k)$-th bits of the second stream with the interleaved information bits sequentially, and fill $(N_1-k+1)$-th through k-th bits of the second stream with the interleaved parity bits.

Optionally, in a not claimed example, the modulating unit 84 is specifically configured to:

modulate the first stream and the second stream using a 16QAM constellation points mapping method, and divide bits corresponding to 16QAM constellation points into bit positions with high reliability and bit positions with low reliability;
fill corresponding bit positions with high reliability in S0 and S1 with the information bits; and after filling with the information bits, fill remaining bit positions in S0 and S1 with the parity bits.

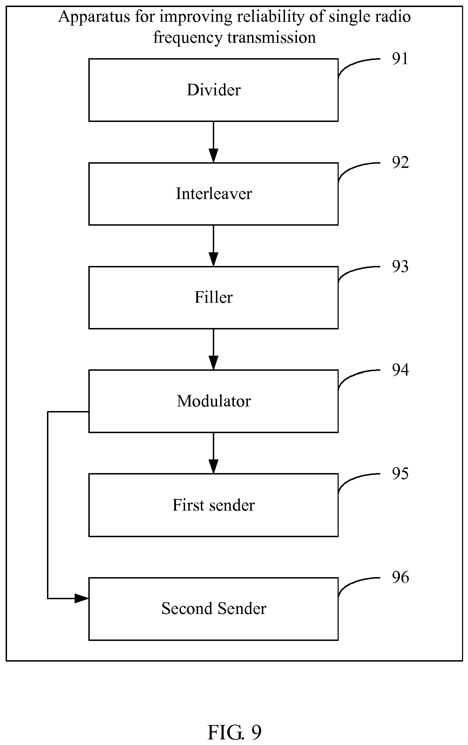

The apparatus for improving reliability of single radio frequency MIMO transmission provided in the present embodiment of the present invention may use the aforementioned corresponding method for improving reliability of single radio frequency transmission, please refer to the relevant description of the method embodiment corresponding to FIG. 4 for the details, which will not be repeated herein. FIG. 9 shows a component structure of an apparatus for improving reliability of single radio frequency MIMO transmission according to an example of the present invention, which only shows parts relevant to the example of the present invention for convenience of explanation.
The apparatus for improving reliability of single radio frequency transmission includes:

a divider 91, configured to receive original information bits, encode the original information bits, and divide the same into information bits and parity bits;
an interleaver 92, configured to interleave the information bits and the parity bits respectively;
a filler 93, configured to fill a first stream and a second stream with the interleaved information bits and parity bits;
a modulator 94, configured to modulate the first stream and the second stream to obtain a modulated symbol S0 mapped from the first stream, and a modulated symbol S1 mapped from the second stream;
a first sender 95, configured to send S0 to a power amplifier, and transmit information of the first stream via an active element; and
a second sender 96, configured to send S0 and S1 to a control circuit, where the control circuit transmits information of the second stream by controlling electromagnetic coupling between the active element and a parasitic element.

Optionally, in a not claimed example, the second sender 96 is specifically configured to: send the S0 and S1 to the control circuit, where the control circuit select proper $xL_1$ and $xL_2$ according to a value of $\frac{S1}{S0}$, to make a signal transmitted by the electromagnetic coupling between the active element and the parasitic element be equal to $R_0 \frac{S1}{S0}$.

Optionally, in a claimed embodiment, the filler 93 is specifically configured to: presuming that the interleaved information bits are $a_n$, n=1, ..., $N_1$, and the interleaved parity bits are $b_m$, m=1, ..., $N_2$;

establish the first stream and the second stream, where the first stream and the second stream include the same number of bits, and the number of bits included in the first stream and the second stream is k, where $k = \frac{N_1 + N_2}{2}$; judge whether the number of bits in the interleaved information bits is less than or equal to the number of bits included in the first stream;

when the number of bits in the interleaved information bits is less than or equal to the number of bits included in the first stream, fill the first stream with the interleaved information bits, and fill remaining bits of the first stream and bits of the second stream with the interleaved parity bits; and

when the number of bits in the interleaved information bits is greater than the number of bits included in the first stream, fill the first stream and the second stream with the interleaved information bits, and fill remaining bits of the second stream with the interleaved parity bits.

Optionally, the filler 93 is specifically configured to:

presuming that the interleaved information bits is $a_n$, n=1, ..., $N_1$, and the interleaved parity bits is $b_m$, m=1, ...,$N_2$; establish the first stream and the second stream, where the first stream and the second stream include the same number of bits, and the number of bits included in the first stream and the second stream is k, where $k = \dfrac{N_1 + N_2}{2}$;

determine a numerical relationship between the number of bits of the interleaved information bits and the number of bits included in the first stream;

when $N_1 <= \dfrac{k}{2}$, fill first $N_1$ bits of the first stream with the interleaved information bits, and fill remaining bits of the first stream and the second stream with the interleaved parity bits;

when $\dfrac{k}{2} < N_1 <= k$, fill first $\dfrac{k}{2}$ bits of the first stream and first $\left(N1 - \dfrac{k}{2}\right)$ bits of the second stream with the interleaved information bits, and fill remaining bits of the first stream and remaining bits of the second stream with the interleaved parity bits;

when $k < N_1 <= \dfrac{3k}{2}$, fill the first $\dfrac{k}{2}$ bits of the first stream, first $\dfrac{k}{2}$ bits of the second stream, and the remaining bits of the first stream with the interleaved information bits sequentially, and fill the remaining bits of the first stream and remaining bits of the second stream with the interleaved parity bits; and

when $\dfrac{3k}{2} < N_1 < 2k$, fill the first $\dfrac{k}{2}$ bits of the first stream, the first $\dfrac{k}{2}$ bits of the second stream, last $\dfrac{k}{2}$ bits of the first stream, and $\left(\dfrac{k}{2} + 1\right)$-th through ($N_1$-k)-th bits of the second stream with the interleaved information bits sequentially, and fill ($N_1$-k+1)-th through k-th bits of the second stream with the interleaved parity bits.

Optionally, in a not claimed example, the modulator 94, is specifically configured to: modulate the first stream and the second stream using a 16QAM constellation points mapping method, and divide bits corresponding to 16QAM constellation points into bit positions with high reliability and bit positions with low reliability;

fill corresponding bit positions with high reliability in S0 and S1 with the information bits; and after filling with the information bits, fill remaining bit position in S0 and S1 with the parity bits. Those skilled in the art may understand that all or part of the steps in the methods of the embodiments can be implemented by a program instructing relevant hardware. The program may be stored in a readable storage medium and the storage medium includes ROM/ RAM and the like.

The above descriptions are preferable embodiments of the present invention, but are not intended to limit the protection scope of the present invention. Any modification, equivalent replacement, or improvement made without departing from the principle of the present invention should fall within the protection scope of the present invention. Some of these examples may not fall within the scope of any of the appended claims.

**Claims**

1. A method for improving reliability of single radio frequency multiple-input and multiple-output MIMO transmission, comprising:

receiving (S401) original information bits, encoding the original information bits, and dividing same into information bits and parity bits;

interleaving (S402) the information bits and the parity bits, respectively;

filling (S403) a first stream and a second stream with the interleaved information bits and parity bits;

modulating (S404) the first stream and the second stream to obtain a modulated symbol S0 mapped from the first stream and a modulated symbol S1 mapped from the second stream;

sending (S405) S0 to a power amplifier, and transmitting information of the first stream via an active element; and

sending (S406) S0 and S1 to a control circuit, and transmitting information of the second stream by the control circuit through controlling electromagnetic coupling between the active element and a parasitic element;

**characterized in**:

wherein the filling (S403) a first stream and a second stream with the interleaved information bits and parity bits, is specifically:

presuming that the interleaved information bits are $a_n$, n=1, ..., $N_1$, and the interleaved parity bits are $b_m$, m=1, ..., $N_2$; establishing the first stream and the second stream, wherein the first stream and the second stream include a same number of bits, and the number of bits included in the first stream and the second stream is k, wherein $k=\dfrac{N_1+N_2}{2}$; judging whether a number of bits of the interleaved information bits is less than or equal to the number of bits included in the first stream; when the number of bits of the interleaved information bits is less than or equal to the number of bits included in the first stream, filling the first stream with the interleaved information bits, and filling remaining bits of the first stream and bits of the second stream with the interleaved parity bits; and when the number of bits of the interleaved information bits is greater than the number of bits included in the first stream, filling the first stream and the second stream with the interleaved information bits, and filling remaining bits of the second stream with the interleaved parity bits; or,

presuming that the interleaved information bits are $a_n$, n=1, ..., $N_1$, and the interleaved parity bits are $b_m$, m=1, ..., $N_2$; establishing the first stream and the second stream, wherein the first stream and the second stream include a same number of bits, and the number of bits included in the first stream and the second stream is k, wherein $k=\dfrac{N_1+N_2}{2}$; determining a numerical relationship between a number of bits of the interleaved information bits and the number of bits included in the first stream; when $N_1<=\dfrac{k}{2}$, filling first $N_1$ bits of the first stream with the interleaved information bits, and filling remaining bits of the first stream and the second stream with the interleaved parity bits; when $\dfrac{k}{2}<N_1<=k$, filling first $\dfrac{k}{2}$ bits of the first stream and first $(N1-\dfrac{k}{2})$ bits of the second stream with the interleaved information bits, and filling remaining bits of the first stream and remaining bits of the second stream with the interleaved parity bits; when $k<N_1<=\dfrac{3k}{2}$, filling the first $\dfrac{k}{2}$ bits of the first stream, first $\dfrac{k}{2}$ bits of the second stream, and the remaining bits of the first stream with the interleaved information bits sequentially, and filling the remaining bits of the first stream and remaining bits of the second stream with the interleaved parity bits; and when $\dfrac{3k}{2}<N_1<2k$, filling the first $\dfrac{k}{2}$ bits of the first stream, the first $\dfrac{k}{2}$ bits of the second stream, last $\dfrac{k}{2}$ bits of the first stream, and $(\dfrac{k}{2}+1)$-th through ($N_1$-k)-th bits of the second stream with the interleaved information bits sequentially, and filling ($N_1$-k+1)-th through k-th bits of the second stream with the interleaved parity bits.

2. An apparatus for improving reliability of single radio frequency MIMO transmission, comprising:

a dividing unit (81), configured to receive original information bits, encode the original information bits, and divide same into information bits and parity bits;

an interleaving unit (82), configured to interleave the information bits and the parity bits respectively;

a filling unit (83), configured to fill a first stream and a second stream with the interleaved information bits and parity bits;

a modulating unit (84), configured to modulate the first stream and the second stream to obtain a modulated symbol S0 mapped from the first stream and a modulated symbol S1 mapped from the second stream;

a first sending unit (85), configured to send S0 to a power amplifier, and transmit information of the first stream via an active element; and

a second sending unit (86), configured to send S0 and S1 to a control circuit, wherein the control circuit transmits information of the second stream by controlling electromagnetic coupling between the active element and a parasitic element;

**characterized in**:

wherein the filling unit (83) is specifically configured to:

presuming that the interleaved information bits are $a_n$, n=1, ..., $N_1$, and the interleaved parity bits are $b_m$, m=1, ..., $N_2$ ; establish the first stream and the second stream, wherein the first stream and the second stream include a same number of bits, and the number of bits included in the first stream and the second stream is k, wherein $k = \dfrac{N_1 + N_2}{2}$ ; judge whether a number of bits of the interleaved information bits is less than or equal to the number of bits included in the first stream; when the number of bits of the interleaved information bits is less than or equal to the number of bits included in the first stream, fill the first stream with the interleaved information bits, and fill remaining bits of the first stream and bits of the second stream with the interleaved parity bits; and when the number of bits of the interleaved information bits is greater than the number of bits included in the first stream, fill the first stream and the second stream with the interleaved information bits, and fill remaining bits of the second stream with the interleaved parity bits; or, presuming that the interleaved information bits are $a_n$, n=1, ..., $N_1$, and the interleaved parity bits are $b_m$, m=1, ..., $N_2$ ; establish the first stream and the second stream, wherein the first stream and the second stream include a same number of bits, and the number of bits included in the first stream and the second stream is k, wherein $k = \dfrac{N_1 + N_2}{2}$ ; determine a numerical relationship between a number of bits of the interleaved information bits and the number of bits included in the first stream; when $N_1 <= \dfrac{k}{2}$ , fill first $N_1$ bits of the first stream with the interleaved information bits, and fill remaining bits of the first stream and the second stream with the interleaved parity bits; when $\dfrac{k}{2} < N_1 <= k$, fill first $\dfrac{k}{2}$ bits of the first stream and first $(N1 - \dfrac{k}{2})$ bits of the second stream with the interleaved information bits, and fill remaining bits of the first stream and remaining bits of the second stream with the interleaved parity bits; when $k < N_1 <= \dfrac{3k}{2}$ , fill the first $\dfrac{k}{2}$ bits of the first stream, first $\dfrac{k}{2}$ bits of the second stream, and the remaining bits of the first stream with the interleaved information bits sequentially, and fill the remaining bits of the first stream and remaining bits of the second stream with the interleaved parity bits; and when $\dfrac{3k}{2} < N_1 < 2k$, fill the first $\dfrac{k}{2}$ bits of the first stream, the first 2 bits of the second stream, last $\dfrac{k}{2}$ bits of the first stream, and $(\dfrac{k}{2} + 1)$-th through $(N_1 - k)$-th bits of the second stream with the interleaved information bits sequentially, and fill $(N_1 - k + 1)$-th through k-th bits of the second stream with the interleaved parity bits.

**Patentansprüche**

1. Verfahren zum Verbessern der Zuverlässigkeit von Einzelfunkfrequenz-Mehrfacheingang-Mehrfachausgang-, MIMO-, Übertragung, umfassend:

   Empfangen (S401) ursprünglicher Informationsbits, Kodieren der ursprünglichen Informationsbits und Aufteilen derselben in Informationsbits und Paritätsbits,
   Verschachteln (S402) der Informationsbits bzw. der Paritätsbits,
   Füllen (S403) eines ersten Stroms und eines zweiten Stroms mit den verschachtelten Informationsbits und Paritätsbits,
   Modulieren (S404) des ersten Stroms und des zweiten Stroms, um ein aus dem ersten Strom abgebildetes moduliertes Symbol S0 und ein aus dem zweiten Strom abgebildetes moduliertes Symbol S1 zu erhalten,
   Senden (S405) von S0 an einen Leistungsverstärker und Übertragen von Informationen des ersten Stroms über ein aktives Element und
   Senden (S406) von S0 und S1 an eine Steuerschaltung und Übertragen von Informationen des zweiten Stroms durch die Steuerschaltung durch Steuern einer elektromagnetischen Kopplung zwischen dem aktiven Element und einem parasitären Element,
   **gekennzeichnet dadurch:**
   **dass** es sich beim Füllen (S403) eines ersten Stroms und eines zweiten Stroms mit den verschachtelten Informationsbits und Paritätsbits konkret um Folgendes handelt:

   Voraussetzen, dass die verschachtelten Informationsbits $a_n$ sind, n=1, ..., $N_1$ ist und die verschachtelten Paritätsbits $b_m$ sind und m=1, ..., $N_2$ ist; Erstellen des ersten Stroms und des zweiten Stroms, wobei der erste Strom und der zweite Strom eine gleiche Anzahl an Bits aufweisen und die Anzahl an im ersten Strom und im zweiten Strom enthaltenen Bits k ist, wobei $k = \frac{N_1 + N_2}{2}$; Beurteilen, ob eine Anzahl an Bits der verschachtelten Informationsbits kleiner oder gleich der Anzahl an im ersten Strom enthaltenen Bits ist; wenn die Anzahl an Bits der verschachtelten Informationsbits kleiner oder gleich der Anzahl an im ersten Strom enthaltenen Bits ist, Füllen des ersten Stroms mit den verschachtelten Informationsbits und Füllen von verbleibenden Bits des ersten Stroms und Bits des zweiten Stroms mit den verschachtelten Paritätsbits; und wenn die Anzahl an Bits der verschachtelten Informationsbits größer ist als die Anzahl an im ersten Strom enthaltenen Bits, Füllen des ersten Stroms und des zweiten Stroms mit den verschachtelten Informationsbits und Füllen verbleibender Bits des zweiten Stroms mit den verschachtelten Paritätsbits, oder
   Voraussetzen, dass die verschachtelten Informationsbits $a_n$ sind, n=1, ..., $N_1$ ist und die verschachtelten Paritätsbits $b_m$ sind und m=1, ..., $N_2$ ist; Erstellen des ersten Stroms und des zweiten Stroms, wobei der erste Strom und der zweite Strom eine gleiche Anzahl an Bits aufweisen und die Anzahl an im ersten Strom und im zweiten Strom enthaltenen Bits k ist, wobei $k = \frac{N_1 + N_2}{2}$; Bestimmen einer numerischen Beziehung zwischen einer Anzahl an Bits der verschachtelten Informationsbits und der Anzahl an im ersten Strom enthaltenen Bits; wenn $N_1 <= \frac{k}{2}$, Füllen erster $N_1$ Bits des ersten Stroms mit den verschachtelten Informationsbits und Füllen verbleibender Bits des ersten Stroms und des zweiten Stroms mit den verschachtelten Paritätsbits; wenn $\frac{k}{2} < N_1 <= k$, Füllen erster $\frac{k}{2}$ Bits des ersten Stroms und erster $\left(N_1 - \frac{k}{2}\right)$ Bits des zweiten Stroms mit den verschachtelten Informationsbits und Füllen verbleibender Bits des ersten Stroms und verbleibender Bits des zweiten Stroms mit den verschachtelten Paritätsbits; wenn $k < N_1 <= \frac{3k}{2}$, sequenzielles Füllen der ersten $\frac{k}{2}$ Bits des ersten Stroms, ersten $\frac{k}{2}$ Bits des zweiten Stroms und der verbleibenden Bits des ersten Stroms mit den verschachtelten Informationsbits und Füllen der verbleibenden Bits des ersten Stroms und verbleibenden Bits des zweiten Stroms mit den verschachtelten Paritätsbits; und wenn $\frac{3k}{2} < N_1 < 2k$, sequenzielles Füllen der ersten $\frac{k}{2}$ Bits des ersten Stroms, der ersten $\frac{k}{2}$ Bits des zweiten Stroms, letzter $\frac{k}{2}$ Bits des ersten Stroms und $\left(\frac{k}{2} + 1\right)$-ter bis

einschließlich ($N_1$-$k$)-ter Bits des zweiten Stroms mit den verschachtelten Informationsbits und Füllen ($N_1$-$k$+1)-ter bis einschließlich k-ter Bits des zweiten Stroms mit den verschachtelten Paritätsbits.

2. Vorrichtung zum Verbessern der Zuverlässigkeit von Einzelfunkfrequenz-MIMO-Übertragung, umfassend:

eine Aufteilungseinheit (81), die dafür konfiguriert ist, ursprüngliche Informationsbits zu empfangen, die ursprünglichen Informationsbits zu kodieren und diese in Informationsbits und Paritätsbits aufzuteilen,
eine Verschachtelungseinheit (82), die dafür konfiguriert ist, die Informationsbits bzw. die Paritätsbits zu verschachteln,
eine Fülleinheit (83), die dafür konfiguriert ist, einen ersten Strom und einen zweiten Strom mit den verschachtelten Informationsbits und Paritätsbits zu füllen,
eine Moduliereinheit (84), die dafür konfiguriert ist, den ersten Strom und den zweiten Strom zu modulieren, um ein aus dem ersten Strom abgebildetes moduliertes Symbol S0 und ein aus dem zweiten Strom abgebildetes moduliertes Symbol S1 zu erhalten,
eine erste Sendeeinheit (85), die dafür konfiguriert ist, S0 an einen Leistungsverstärker zu senden und Informationen des ersten Stroms über ein aktives Element zu übertragen, und
eine zweite Sendeeinheit (86) die dafür konfiguriert ist, S0 und S1 an eine Steuerschaltung zu senden, wobei die Steuerschaltung Informationen des zweiten Stroms durch Steuern elektromagnetischer Kopplung zwischen dem aktiven Element und einem parasitären Element überträgt,
**gekennzeichnet dadurch:**
**dass** die Fülleinheit (83) konkret konfiguriert ist, um:

vorauszusetzen, dass die verschachtelten Informationsbits $a_n$ sind, n=1, ..., $N_1$ ist und die verschachtelten Paritätsbits $b_m$ sind und m=1, ..., $N_2$ ist; den ersten Strom und den zweiten Strom zu erstellen, wobei der erste Strom und der zweite Strom eine gleiche Anzahl an Bits aufweisen und die Anzahl an im ersten Strom und im zweiten Strom enthaltenen Bits k ist, wobei $k = \frac{N_1 + N_2}{2}$; zu beurteilen, ob eine Anzahl an Bits der verschachtelten Informationsbits kleiner oder gleich der Anzahl an im ersten Strom enthaltenen Bits ist; wenn die Anzahl an Bits der verschachtelten Informationsbits kleiner oder gleich der Anzahl an im ersten Strom enthaltenen Bits ist, den ersten Strom mit den verschachtelten Informationsbits zu füllen und verbleibende Bits des ersten Stroms und Bits des zweiten Stroms mit den verschachtelten Paritätsbits zu füllen; und wenn die Anzahl an Bits der verschachtelten Informationsbits größer ist als die Anzahl an im ersten Strom enthaltenen Bits, den ersten Strom und den zweiten Strom mit den verschachtelten Informationsbits zu füllen und verbleibende Bits des zweiten Stroms mit den verschachtelten Paritätsbits zu füllen, oder

vorauszusetzen, dass die verschachtelten Informationsbits $a_n$ sind, n=1, ..., $N_1$ ist und die verschachtelten Paritätsbits $b_m$ sind und m=1, ..., $N_2$ ist; den ersten Strom und den zweiten Strom zu erstellen, wobei der erste Strom und der zweite Strom eine gleiche Anzahl an Bits aufweisen und die Anzahl an im ersten Strom und im zweiten Strom enthaltenen Bits k ist, wobei $k = \frac{N_1 + N_2}{2}$; eine numerische Beziehung zwischen einer Anzahl an Bits der verschachtelten Informationsbits und der Anzahl an im ersten Strom enthaltenen Bits zu bestimmen; wenn $N_1 <= \frac{k}{2}$, erste $N_1$ Bits des ersten Stroms mit den verschachtelten Informationsbits zu füllen und verbleibende Bits des ersten Stroms und des zweiten Stroms mit den verschachtelten Paritätsbits zu füllen; wenn $\frac{k}{2} < N_1 <= k$, erste $\frac{k}{2}$ Bits des ersten Stroms und erste $\left(N_1 - \frac{k}{2}\right)$ Bits des zweiten Stroms mit den verschachtelten Informationsbits zu füllen und verbleibende Bits des ersten Stroms und verbleibende Bits des zweiten Stroms mit den verschachtelten Paritätsbits zu füllen; wenn $k < N_1 <= \frac{3k}{2}$, die ersten $\frac{k}{2}$ Bits des ersten Stroms, ersten $\frac{k}{2}$ Bits des zweiten Stroms und die verbleibenden Bits des ersten Stroms sequenziell mit den verschachtelten Informationsbits zu füllen und die verbleibenden Bits des ersten Stroms und verbleibenden Bits des zweiten Stroms mit den verschachtelten Paritätsbits zu füllen; und wenn $\frac{3k}{2} < N_1 < 2k$, die ersten $\frac{k}{2}$ Bits des ersten Stroms, die ersten $\frac{k}{2}$ Bits des zweiten Stroms, letzte $\frac{k}{2}$ Bits des ersten Stroms und $\left(\frac{k}{2}+1\right)$-te bis einschließlich ($N_1$-$k$)-te Bits des zweiten Stroms sequenziell mit den verschachtelten Informationsbits zu füllen und ($N_1$-$k$+1)-te bis einschließlich k-te Bits des zweiten Stroms mit den verschachtelten Paritätsbits zu füllen.

## Revendications

1. Procédé pour améliorer la fiabilité d'une transmission à entrées multiples et sorties multiples MIMO unique radiofréquence, consistant à :

recevoir (S401) des bits d'informations originaux, coder les bits d'informations originaux et les diviser en bits d'informations et bits de parité ;
entrelacer (S402) les bits d'informations et les bits de parité, respectivement ;
remplir (S403) un premier flux et un second flux avec les bits d'informations et les bits de parité entrelacés ;
moduler (S404) le premier flux et le second flux pour obtenir un symbole modulé S0 mappé à partir du premier flux et un symbole modulé S1 mappé à partir du second flux ;
envoyer (S405) S0 vers un amplificateur de puissance, et transmettre des informations du premier flux via un élément actif ; et
envoyer (S406) S0 et S1 vers un circuit de commande, et transmettre des informations du second flux par le circuit de commande en commandant le couplage électromagnétique entre l'élément actif et un élément parasite ;
**caractérisé en ce que** :
le remplissage (S403) d'un premier flux et d'un second flux avec les bits d'informations et les bits de parité entrelacés consiste spécifiquement à :

assumer que les bits d'informations entrelacés sont $a_n$, n=1, ..., $N_1$, et que les bits de parité entrelacés sont $b_m$, m=1, ..., $N_2$; établir le premier flux et le second flux, dans lequel le premier flux et le second flux comprennent un même nombre de bits et le nombre de bits inclus dans le premier flux et le second flux est k, où $k = \frac{N_1 + N_2}{2}$ ; estimer si un nombre de bits des bits d'informations entrelacés est inférieur ou égal au nombre de bits inclus dans le premier flux ; lorsque le nombre de bits des bits d'informations entrelacés est inférieur ou égal au nombre de bits inclus dans le premier flux, remplir le premier flux avec les bits d'informations entrelacés et remplir les bits restants du premier flux et les bits du second flux avec les bits de parité entrelacés ; et lorsque le nombre de bits des bits d'informations entrelacés est supérieur au nombre de bits inclus dans le premier flux, remplir le premier flux et le second flux avec les bits d'informations entrelacés et remplir les bits restants du second flux avec les bits de parité entrelacés ; ou

assumer que les bits d'informations entrelacés sont $a_n$, n=1, ..., $N_1$, et que les bits de parité entrelacés sont $b_m$, m=1, ..., $N_2$; établir le premier flux et le second flux, dans lequel le premier flux et le second flux comprennent un même nombre de bits et le nombre de bits inclus dans le premier flux et le second flux est k, où $k = \frac{N_1 + N_2}{2}$ ; déterminer une relation numérique entre un nombre de bits des bits d'informations entrelacés et le nombre de bits inclus dans le premier flux ; lorsque $N_1 <= \frac{k}{2}$, remplir les premiers $N_1$ bits du premier flux avec les bits d'informations entrelacés et remplir les bits restants du premier flux et du second flux avec les bits de parité entrelacés ; lorsque $\frac{k}{2} < N_1 <= k$, remplir les premiers $\frac{k}{2}$ bits du premier flux et les premiers $\left(N1 - \frac{k}{2}\right)$ bits du second flux avec les bits d'informations entrelacés et remplir les bits restants du premier flux et les bits restants du second flux avec les bits de parité entrelacés ; lorsque $k < N_1 <= \frac{3k}{2}$, remplir les premiers $\frac{k}{2}$ bits du premier flux, les premiers $\frac{k}{2}$ bits du second flux et les bits restants du premier flux avec les bits d'informations entrelacés séquentiellement, et remplir les bits restants du premier flux et les bits restants du second flux avec les bits de parité entrelacés ; et

lorsque $\frac{3k}{2} < N_1 < 2k$, remplir les premiers $\frac{k}{2}$ bits du premier flux, les premiers $\frac{k}{2}$ bits du second flux, les derniers $\frac{k}{2}$ bits du premier flux, et les $\left(\frac{k}{2} + 1\right)$ème à ($N_1$-$k$)ème bits du second flux avec les bits d'informations entrelacés séquentiellement, et remplir les ($N_1$-$k$+1)ème à k-ème bits du second flux avec les bits de parité entrelacés.

2. Appareil pour améliorer la fiabilité d'une transmission MIMO unique radiofréquence, comprenant :

une unité de division (81) conçue pour recevoir des bits d'informations originaux, coder les bits d'informations originaux et les diviser en bits d'informations et bits de parité ;
une unité d'entrelacement (82) conçue pour entrelacer les bits d'informations et les bits de parité, respectivement ;
une unité de remplissage (83) conçue pour remplir un premier flux et un second flux avec les bits d'informations et les bits de parité entrelacés ;
une unité de modulation (84) conçue pour moduler le premier flux et le second flux pour obtenir un symbole modulé S0 mappé à partir du premier flux et un symbole modulé S1 mappé à partir du second flux ;
une première unité d'envoi (85) conçue pour envoyer S0 vers un amplificateur de puissance, et transmettre des informations du premier flux via un élément actif ; et
une seconde unité d'envoi (86) conçue pour envoyer S0 et S1 vers un circuit de commande, le circuit de commande transmettant des informations du second flux en commandant le couplage électromagnétique entre l'élément actif et un élément parasite ;
**caractérisé en ce que** :
l'unité de remplissage (83) est spécifiquement conçue pour :

assumer que les bits d'informations entrelacés sont $a_n$, n=1, ..., $N_1$, et que les bits de parité entrelacés sont $b_m$, m=1, ..., $N_2$; établir le premier flux et le second flux, dans lequel le premier flux et le second flux comprennent un même nombre de bits et le nombre de bits inclus dans le premier flux et le second flux est k, où $k = \frac{N_1 + N_2}{2}$ ; estimer si un nombre de bits des bits d'informations entrelacés est inférieur ou égal au nombre de bits inclus dans le premier flux ; lorsque le nombre de bits des bits d'informations entrelacés est inférieur ou égal au nombre de bits inclus dans le premier flux, remplir le premier flux avec les bits d'informations entrelacés et remplir les bits restants du premier flux et les bits du second flux avec les bits de parité entrelacés ; et lorsque le nombre de bits des bits d'informations entrelacés est supérieur au nombre de bits inclus dans le premier flux, remplir le premier flux et le second flux avec les bits d'informations entrelacés et remplir les bits restants du second flux avec les bits de parité entrelacés ; ou

assumer que les bits d'informations entrelacés sont $a_n$, n=1, ..., $N_1$, et que les bits de parité entrelacés sont $b_m$, m=1, ..., $N_2$; établir le premier flux et le second flux, dans lequel le premier flux et le second flux comprennent un même nombre de bits et le nombre de bits inclus dans le premier flux et le second flux est k, où $k = \frac{N_1 + N_2}{2}$ ; déterminer une relation numérique entre un nombre de bits des bits d'informations entrelacés et le nombre de bits inclus dans le premier flux ; lorsque $N_1 <= \frac{k}{2}$, remplir les premiers $N_1$

bits du premier flux avec les bits d'informations entrelacés et remplir les bits restants du premier flux et du second flux avec les bits de parité entrelacés ; lorsque $\frac{k}{2} < N_1 <= k$, remplir les premiers $\frac{k}{2}$ bits du premier flux et les premiers $\left(N1 - \frac{k}{2}\right)$ bits du second flux avec les bits d'informations entrelacés et remplir les bits restants du premier flux et les bits restants du second flux avec les bits de parité entrelacés ;

lorsque $k < N_1 <= \frac{3k}{2}$, remplir les premiers $\frac{k}{2}$ bits du premier flux, les premiers $\frac{k}{2}$ bits du second flux et les bits restants du premier flux avec les bits d'informations entrelacés séquentiellement, et remplir les bits restants du premier flux et les bits restants du second flux avec les bits de parité entrelacés ; et

lorsque $\frac{3k}{2} < N_1 < 2k$, remplir les premiers $\frac{k}{2}$ bits du premier flux, les premiers $\frac{k}{2}$ bits du second flux, les derniers $\frac{k}{2}$ bits du premier flux, et les $\left(\frac{k}{2}+1\right)$ème à ($N_1$-$k$)ème bits du second flux avec les bits d'informations entrelacés séquentiellement, et remplir les ($N_1$-$k$+1)ème à k-ème bits du second flux avec les bits de parité entrelacés.

FIG. 1

FIG. 2

FIG. 3

Receive original information bits, encode the original information bits, and divide the same into information bits and check bits — S401

Interleave the information bits and the check bits, respectively — S402

Fill a first stream and a second stream with the interleaved information bits and check bits — S403

Modulate the first stream and the second stream to obtain a modulated symbol S0 mapped from the first stream and a modulated symbol S1 mapped from the second stream — S404

Send S0 to a power amplifier, and transmit information of the first stream via an active element — S405

Send S0 and S1 to a control circuit, and transmit information of the second stream by the control circuit through controlling electromagnetic coupling between the active element and a parasitic element — S406

FIG. 4

FIG. 5

FIG. 6

FIG. 7

Apparatus for improving reliability of single radio
frequency transmission

Dividing unit — 81

↓

Interleaving unit — 82

↓

Filling unit — 83

↓

Modulating unit — 84

↓

First sending unit — 85

Second sending unit — 86

FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- MIMO transmission and reception techniques using three-element ESPAR antennas. **ALRABADI O et al.** IEEE COMMUNICATIONS LETTERS. IEEE SERVICE CENTER, 01 April 2009, vol. 13, 236-238